Europäisches Patentamt

European Patent Office

Office européen des brevets

(19)

(11) **EP 0 609 666 B1**

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(51) Int Cl.⁶: **H04H 5/00**

(21) Anmeldenummer: **94100345.1**

(22) Anmeldetag: **12.01.1994**

(54) **Schaltungsanordnung zur Decodierung eines Multiplexsignals in einem Stereo-Rundfunkempfänger**

Circuit for decoding a multiplex signal in a stereo broadcast receiver

Circuit pour décoder un signal multiplexé dans un récepteur de radiodiffusion stéréophonique

(84) Benannte Vertragsstaaten:
**AT CH DE ES FR GB IT LI PT**

(30) Priorität: **05.02.1993 DE 4303387**

(43) Veröffentlichungstag der Anmeldung:
**10.08.1994 Patentblatt 1994/32**

(73) Patentinhaber: **Blaupunkt-Werke GmbH
D-31139 Hildesheim (DE)**

(72) Erfinder:
- **Vogt, Lothar, Dr.
  D-31249 Hohenhameln (DE)**
- **Kässer, Jürgen, Dr.
  D-31199 Diekholzen (DE)**
- **Chahabadi, Djahanyar, Dr.
  23909 Ratzeburg (DE)**

(56) Entgegenhaltungen:
**EP-A- 0 308 520         EP-A- 0 512 606
DE-A- 3 505 950         US-A- 4 630 299
US-A- 4 893 341**

**Beschreibung**

Die Erfindung betrifft ein Verfahren zur Decodierung eines Multiplexsignals in einem Stereo-Rundfunkempfänger, wobei das Multiplexsignal ein Summensignal (L + R) im Basisband, einen mit einem Differenzsignal (L - R) modulierten Hilfsträger und ein Pilotsignal mit der halben Frequenz des Hilfsträgers enthält.

Zu einer Decodierung des Multiplexsignals ist einerseits eine Demodulation des hilfsträgerfrequenten Differenzsignals und andererseits eine Matrizierung des dadurch entstehenden Differenzsignals mit dem Summensignal erforderlich. Das im Multiplexsignal enthaltene Pilotsignal - meist auch Pilotton genannt - ermöglicht eine Regeneration des Hilfsträgers, so daß zur Demodulation des hilfsträgerfrequenten Differenzsignals ein Synchrondemodulator bzw. ein geschalteter Demodulator verwendet werden kann. Hierfür sind in der analogen Schaltungstechnik verschiedene Schaltungen bekanntgeworden.

Weiterhin ist aus der EP-A-0 308 520 ein digitaler Demodulator bekannt, der die einzelnen in einem Stereo-Multiplexsignal enthaltenen Komponenten und Informationen voneinander trennt und demoduliert. Dazu verfügt die Demodulatorschaltung über fünf digitale Demodulatoren, wobei die ersten beiden digitalen Demodulatoren zur Synchronisierung eines Empfängers auf das im Multiplexsignal enthaltene Pilotsignal, der dritte Demodulator zur Demodulation des einem 38kHz-Hilfsträger aufmodulierten Stereo-Differenzsignals und ein vierter und ein fünfter Demodulator zur Demodulation eines der zweiten Harmonischen des Pilotsignals aufmodulierten Informationskanals vorgesehen ist. Durch Addition bzw. Subtraktion des im Basisband des Stereo-Multiplexsignals enthaltenen Stereo-Summensignals mit dem durch den dritten Demodulator ins Basisband herabgemischten Stereo-Differenzsignal können die Audiosignale für den linken und den rechten Stereo-Kanal gewonnen werden.

Aufgabe der vorliegenden Erfindung ist es, die Decodierung eines Multiplexsignals, das vorzugsweise in digitaler Form vorliegt, mit Mitteln der digitalen Schaltungstechnik in vorteilhafter Weise zu ermöglichen.

Das erfindungsgemäße Verfahren ist dadurch gekennzeichnet, daß das Multiplexsignal in digitaler Form mit einem aus einem im Rundfunkempfänger erzeugten Abtasttakt gewonnenen Referenzträger in zwei um 90° gegeneinander verschobenen Phasenlagen multipliziert wird, daß die durch die Multiplikation entstehenden Mischsignale mit je einem Korrektursignal unter Bildung von korrigierten Mischsignalen multipliziert werden und daß die korrigierten Mischsignale addiert und zusammen mit dem im Multiplexsignal enthaltenen Summensignal einer Matrixschaltung zur Bildung von Stereo-Audiosignalen (L, R) zugeführt werden.

Ein wesentlicher Vorteil des erfindungsgemäßen Verfahrens besteht darin, daß der Referenzträger mit dem für die digitale Verarbeitung erzeugten Abtasttakt verkoppelt ist.

Daraus ergeben sich wesentliche Vereinfachungen bei der Auslegung der digitalen Schaltung - beispielsweise die Möglichkeit, die Abtastwerte des Referenzträgers aus einer gespeicherten Tabelle auszulesen.

Ferner hat das erfindungsgemäße Verfahren den Vorteil, daß keine Regeneration des Referenzträgers aus dem Pilotsignal erforderlich ist, welche sich durch erheblichen Aufwand und durch Probleme bezüglich des Einschwingverhaltens auszeichnet. Bei einer erfindungsgemäßen Schaltungsanordnung zur Durchführung des Verfahrens steht sofort nach dem Einschalten bzw. nach einem Senderwechsel ein Referenzträger zur Verfügung, so daß sofort eine Demodulation des Differenzsignals stattfindet, die allerdings möglicherweise innerhalb einer Einschwingzeit der Korrekturschaltung nicht optimal korrigiert ist.

Bei einer Weiterbildung der Erfindung ist vorgesehen, daß zur Bildung der Korrektursignale das Multiplexsignal mit einem mit dem Referenzträger phasenverkoppelten Referenz-Pilotsignal in zwei um 90° gegeneinander verschobenen Phasenlagen multipliziert wird, daß die entstehenden weiteren Mischsignale tiefpaßgefiltert werden und daß die tiefpaßgefilterten weiteren Mischsignale zur Bildung des ersten Korrektursignals quadriert und voneinander subtrahiert werden und zur Bildung des zweiten Korrektursignals miteinander und mit zwei multipliziert werden.

Gemäß einer vorteilhaften Ausführungsform dieser Weiterbildung kann ferner vorgesehen sein, daß die tiefpaßgefilterten weiteren Mischsignale zur Bildung eines die Amplitude des Pilotsignals darstellenden Signals quadriert und addiert werden. Dadurch wird ermöglicht, daß die Korrektursignale mit Hilfe des die Amplitude des Pilotsignals darstellenden Signals im Sinne einer Normierung ihrer Amplitude gesteuert werden.

Das die Amplitude des Pilotsignals darstellende Signal kann auch in anderer Weise ausgewertet werden, beispielsweise zur Erkennung der Empfangsqualität.

Eine andere Weiterbildung der Erfindung besteht darin, daß zur Bildung der Korrektursignale ferner je ein Filter vorgesehen ist, dessen Bandbreite derart steuerbar ist, daß nach einem Wechsel des empfangenen Senders die Bandbreite zunächst groß ist und danach verringert wird, und daß die Filter ferner zur Normierung der Amplitude der Korrektursignale dienen. Dadurch wird eine schnelle Detektion des Stereo-Empfangs und eine schnelle Korrektur der Mischsignale nach einem Senderwechsel möglich, während im stationären Betrieb die geringe Bandbreite zur Verringerung des Rauschens beiträgt.

Der Aufwand zur Ableitung der Korrektursignale kann dadurch wesentlich verringert werden, daß nach der Tiefpaßfilterung der weiteren Mischsignale eine Abtastratenreduzierung erfolgt.

Durch die in den weiteren Unteransprüchen aufgeführten Maßnahmen sind weitere vorteilhafte Weiterbildungen und Verbesserungen der im Hauptanspruch angegebenen Erfindung möglich. Unter anderem enthalten die Unteransprüche weitere Ausführungsformen der Erfindung zur Ableitung der Korrektursignale aus den weiteren Mischsignalen.

Ein Ausführungsbeispiel der Erfindung ist in der Zeichnung anhand mehrerer Figuren dargestellt und in der nachfolgenden Beschreibung näher erläutert. Es zeigt:

Fig. 1 ein Blockschaltbild einer Schaltungsanordnung zur Durchführung des erfindungsgemäßen Verfahrens

Fig. 2 ein Blockschaltbild eines in Fig. 1 lediglich schematisch dargestellten Teils einer Schaltungsanordnung zur Ableitung der Korrektursignale und

Fig. 3 ein Blockschaltbild eines bei der Schaltungsanordnung nach Fig. 2 verwendeten Filters.

Gleiche Teile sind in den Figuren mit gleichen Bezugszeichen versehen. Das Ausführungsbeispiel sowie Teile davon sind zwar als Blockschaltbilder dargestellt. Dieses bedeutet jedoch nicht, daß die erfindungsgemäße Schaltungsanordnung auf eine Realisierung mit Hilfe von einzelnen den Blöcken entsprechenden Schaltungen beschränkt ist. Die erfindungsgemäße Schaltungsanordnung ist vielmehr in besonders vorteilhafter Weise mit Hilfe von hochintegrierten Schaltungen realisierbar. Dabei können digitale Signalprozessoren eingesetzt werden, welche bei geeigneter Programmierung die in den Blockschaltbildern dargestellten Verarbeitungsschritte durchführen. Die erfindungsgemäße Schaltungsanordnung kann zusammen mit weiteren Schaltungsanordnungen innerhalb einer integrierten Schaltung wesentliche Teile eines Rundfunkempfängers bilden.

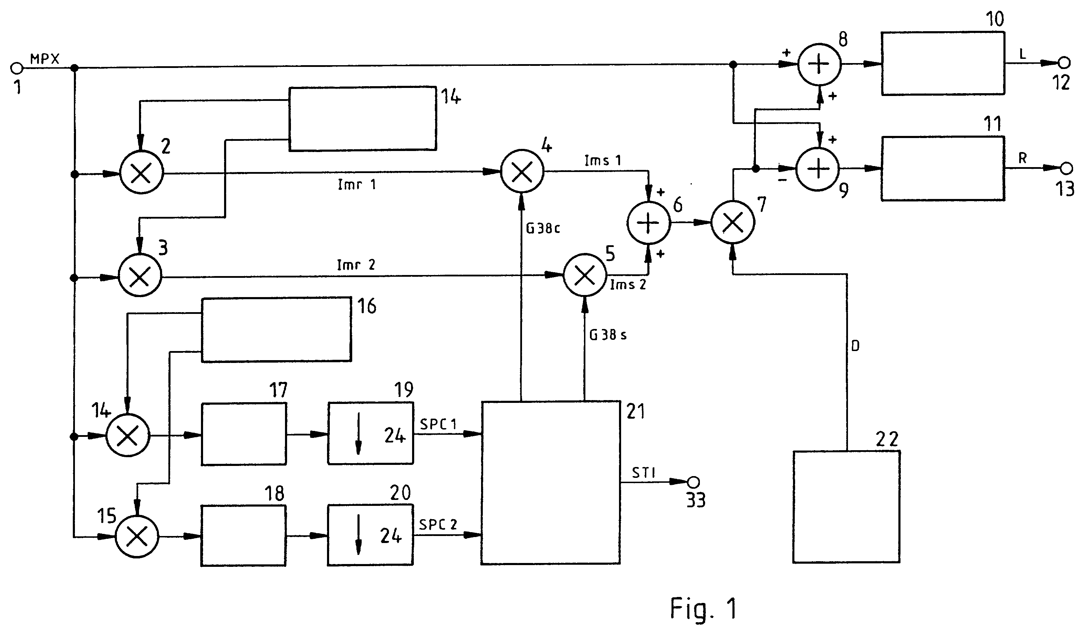

Dem Stereo-Decoder nach Fig. 1 wird über einen Eingang 1 ein digitales Multiplexsignal MPX zugeführt, das in an sich bekannter Weise ein Summensignal L+R, einen mit einem Differenzsignal L-R modulierten Hilfsträger und ein Pilotsignal enthält. Bei dem eingeführten UKW-Stereo-Rundfunk beträgt die Frequenz des Hilfsträgers 38kHz, während das Pilotsignal eine Frequenz von 19kHz aufweist. Die Kreisfrequenz des Pilotsignals wird im folgenden als $w_p$ bezeichnet.

Zur Demodulation des trägerfrequenten Signals sind bei dem Stereo-Decoder nach Fig. 1 Multiplizierer 2, 3, 4, 5 und ein Addierer 6 vorgesehen, von dessen Ausgang über einen weiteren Multiplizierer 7 das demodulierte Differenzsignal L-R zusammen mit dem Multiplexsignal einer aus zwei weiteren Addierern 8, 9 bestehenden Matrixschaltung zugeführt wird. Über zwei Tiefpässe 10, 11 gelangen die decodierten digitalen Stereo-Audiosignale L und R zu Ausgängen 12, 13.

Mit Hilfe der Multiplizierer 2, 3 wird das Multiplexsignal zunächst mit einem Referenzträger multipliziert, wobei die Multiplikation bei 3 mit einem um 90° gegenüber der Multiplikation bei 2 phasenverschobenen Referenzträger erfolgt. Die Abtastwerte der Referenzträger werden aus einer Tabelle 14 ausgelesen, wobei die Frequenz der Referenzträger einen ganzzahligen Bruchteil der Abtastfrequenz, welcher das Multiplexsignal zugrundeliegt, beträgt. Die Abtastfrequenz wird in an sich bekannter Weise im Rundfunkempfänger erzeugt.

Bei einer vorteilhaften Abtastfrequenz von 228kHz ergeben sich sechs Abtastwerte pro Periode der Referenzträger. Die Abtastwerte des Multiplexsignals MPX ergeben sich zu $MPX_n := MPX(n \cdot T)$, wobei n wie auch bei den im folgenden aufgeführten Größen eine ganze Zahl ist, welche die einzelnen Abtastwerte bezeichnet.

Das Multiplexsignal hat folgende Form:

$$MPX_n = (L_n + R_n) + (L_n - R_n) \cdot \sin(2w_p n \cdot T + 2\alpha) + \sqrt{A} \cdot \sin(w_p n \cdot T + \alpha).$$

Durch die Multiplikation mit den aus der Tabelle 14 ausgelesenen Werten des Referenzträgers $\sin(2w_p t)$ bzw. $\cos(2w_p t)$ ergeben sich folgende Mischsignale:

$$Imr1 = MPX_n \cdot \sin(2w_p nT) = \tfrac{1}{2}(L_n - R_n) \cdot \cos 2\alpha + ... \quad \text{bzw.} \tag{1}$$

$$Imr2 = MPX_n \cdot \cos(2w_p nT) = \tfrac{1}{2}(L_n - R_n) \cdot \sin 2\alpha + ... \tag{2}$$

Dabei ist $\alpha$ die Phasendifferenz zwischen dem empfangenen Pilotsignal und einem aus dem Abtasttakt innerhalb des Empfängers erzeugten Referenz-Pilotsignal. Glieder mit höherer Frequenz sind in den Gleichungen (1) und (2) nicht dargestellt, da sie später durch die Tiefpässe 10, 11 herausgefiltert werden.

Die Signale Imr1 und Imr2 werden weiteren Multiplizierern 4, 5 zugeführt, deren Ausgangssignale - im folgenden weitere Mischsignale genannt - sich wie folgt beschreiben lassen:

$$Ims1 = Imr1 \cdot G38c = \tfrac{1}{2}(L_n - R_n) \cdot \cos 2\alpha \cdot G38c_n$$

$$Ims2 = Imr2 \cdot G38s = \tfrac{1}{2}(L_n - R_n) \cdot \sin 2\alpha \cdot G38s_n.$$

Wie später noch zu beschreiben ist, sind die Signale $G38s = \sin 2\alpha$ und $G38c = \cos 2\alpha$. Damit ergeben sich für die weiteren Mischsignale:

$$Ims1 = \tfrac{1}{2}(L_n - R_n) \cdot \cos 2\alpha \cdot \cos 2\alpha.$$

$$Ims2 = \tfrac{1}{2}(L_n - R_n) \cdot \sin 2\alpha \cdot \sin 2\alpha$$

Damit wird das Ausgangssignal des Addierers 6 $\tfrac{1}{2}(L_n - R_n)$. Durch eine geeignete Normierung mit einem zugeführten Wert $D = 2$ mit Hilfe des Multiplizierers 7 entsteht dann $(L_n - R_n)$. D kann ferner dazu benutzt werden, die Kanaltrennung gleitend von Mono- auf Stereo-Empfang umzublenden. Bei Monobetrieb ist $D = 0$.

Die nachfolgende Matrixschaltung aus den Addierern 8, 9 und die Tiefpässe 10, 11 erzeugen dann die digitalen Ausgangssignale L bzw. R. In vorteilhafter Weise können die Tiefpässe auch derart ausgelegt sein, daß außer der Unterdrückung der Frequenzen oberhalb des Nutzsignals die Deemphase durchgeführt wird.

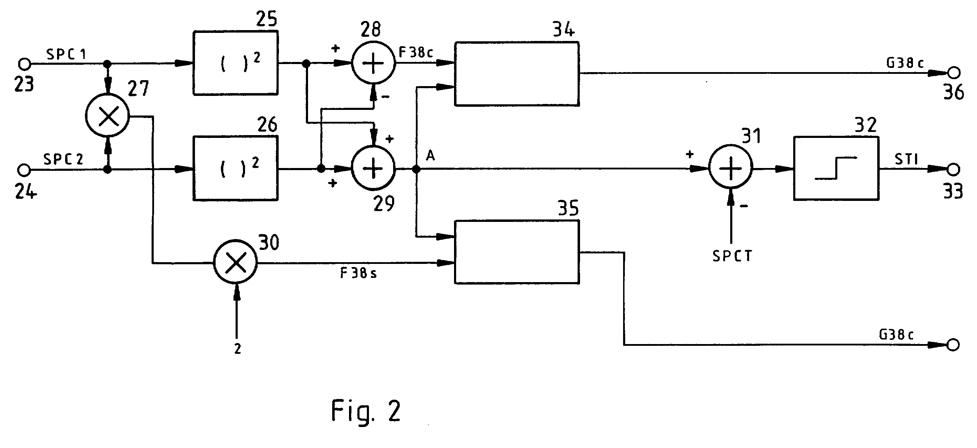

Im folgenden wird zunächst anhand von Fig. 1 die Erzeugung der den Multiplizierern 4 und 5 zugeführten Korrektursignale G38c und G38s erläutert. Dazu wird das Multiplexsignal MPX zunächst mit zwei um 90° gegeneinander phasenverschobenen Referenz-Pilotsignalen $\sin(w_p t)$ und $\cos(w_p t)$ multipliziert, die aus einer Tabelle 16 ausgelesen werden. Die Ausgangssignale der Multiplizierer 14, 15 werden über Tiefpässe 17, 18 geleitet, die Signale $SPC1_n = \sqrt{A} \cdot \cos \alpha$ und $SPC2_n = \sqrt{A} \cdot \sin \alpha$ abgeben. Wegen der im Vergleich zum Pilotsignal sehr viel niedrigeren Frequenz dieser Signale erfolgt eine Abtastratenreduzierung bei 19, 20. Damit kann im Netzwerk 21 erheblicher Aufwand erspart werden. Die Ausgangssignale dieser Schaltungen werden dem Netzwerk 21 zugeführt, mit dessen Hilfe die Korrektursignale G38s und G38c abgeleitet werden. Das Netzwerk 21 wird im folgenden anhand von Fig. 2 genauer beschrieben.

Die über die Eingänge 23, 24 zugeführten Signale SPC1 und SPC2 werden jeweils bei 25, 26 quadriert und bei 27 miteinander multipliziert. Die quadrierten Signale SPC1 und SPC2 werden bei 28 voneinander subtrahiert und bei 29 addiert. Das Produkt aus beiden Signalen wird bei 30 mit "2" multipliziert, so daß insgesamt folgende Signale entstehen:

$$A = (SPC1)^2 + (SPC2)^2$$

$$F38c = (SPC1)^2 - (SPC2)^2 = A \cdot \cos 2\alpha$$

$$F38s = 2 \cdot (SPC1 \cdot SPC2) = A \cdot \sin 2\alpha$$

Die Größe A kennzeichnet die Amplitude des empfangenen Pilotsignals und wird mit Hilfe eines Subtrahierers 31 und einer Schwellwertschaltung 32 in ein Schaltsignal STI umgewandelt, das einem Ausgang 33 entnommen und zur Anzeige des Stereo-Empfangs verwendet werden kann.

Die Signale F38c und F38s werden mit Hilfe von Filtern 34, 35, denen auch das Signal A zugeführt wird, vom Anteil A befreit, damit der Einfluß von Schwankungen der Amplitude des Pilotsignals auf die Stereo-Decodierung entfällt. Die vom Anteil A befreiten Signale G38c und G38s können den Ausgängen 36, 37 entnommen und den Multiplizierern 4, 5 (Fig. 1) zugeführt werden.

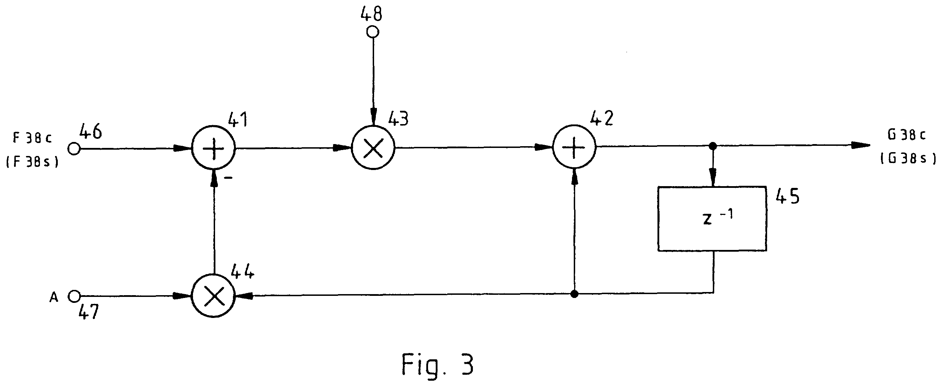

Ein Ausführungsbeispiel für die Filter 34, 35 ist in Fig. 3 dargestellt. Es besteht aus zwei Addierern 41, 42, zwei Multiplizierern 43, 44 und einem Verzögerungsglied 45. Eingängen 46, 47, 48 werden die Signale F38c und A sowie eine reelle Zahl $\mu$ zugeführt, mit der die Schrittweite gesteuert werden kann. Das Signal am Ausgang 49 des Filters nach Fig. 3 ergibt sich dann zu

$$G38c_n = G38c_{n-1} + \mu(F38c_n - A \cdot G38c\text{-}1) \text{ bzw.}$$

$$G38s_n = G38s_{n-1} + \mu(F38s_n - A \cdot G38s\text{-}1).$$

Nach einer Einschwingzeit wird $G38c_n = \cos 2\alpha$ bzw. im Falle des Filters 35 (Fig. 2) $G38s_n = \sin 2\alpha$. Die Zahl $\mu$ kann fest vorgegeben sein. Es ist jedoch auch möglich, die Zahl $\mu$ und damit die Einschwingzeit zu variieren, beispielsweise eine kurze Einschwingzeit entsprechend einer hohen Bandbreite des Filters unmittelbar nach einer Neueinstellung eines Senders zu führen, die dann auf eine geringere Bandbreite zum Zwecke der Besserung des Rauschabstandes herabgesetzt wird.

In Fig. 1 ist ferner eine Schaltung 22 dargestellt, welche ein Signal D liefert, das die Empfangsqualität darstellt. Dieses kann in an sich bekannter Weise aus der Empfangsfeldstärke oder, wie oben beschrieben, aus dem Signal A abgeleitet werden. Das Ausgangssignal D der Schaltung 22 wird dem Multiplizierer 7 zugeführt, so daß eine gleitende Umblendung zwischen Stereo- und Mono-Empfang möglich wird.

## Patentansprüche

1. Verfahren zur Decodierung eines Multiplexsignals in einem Stereo-Rundfunkempfänger, wobei das Multiplexsignal (MPX) ein Summensignal (L + R) im Basisband, einen mit einem Differenzsignal (L - R) modulierten Hilfsträger und ein Pilotsignal mit der halben Frequenz des Hilfsträgers enthält,
dadurch gekennzeichnet,

daß das Multiplexsignal (MPX) in digitaler Form mit einem aus einem im Rundfunkempfänger erzeugten Abtasttakt gewonnenen Referenzträger in zwei um 90° gegeneinander verschobenen Phasenlagen multipliziert wird,
daß die durch die Multiplikation (2, 3) entstehenden Mischsignale (Imr1, Imr2) mit je einem Korrektursignal (G38c, G38s) unter Bildung von korrigierten Mischsignalen (Ims1, Ims2) multipliziert werden,
und daß die korrigierten Mischsignale addiert und zusammen mit dem im Multiplexsignal enthaltenen Summensignal einer Matrixschaltung (8, 9) zur Bildung von Stereo-Audiosignalen (L, R) zugeführt werden.

2. Verfahren nach Anspruch 1, dadurch gekennzeichnet, daß zur Bildung der Korrektursignale (G38c, G38s) das Multiplexsignal (MPX) mit einem mit dem Referenzträger phasenverkoppelten Referenz-Pilotsignal in zwei um 90° gegeneinander verschobenen Phasenlagen multipliziert wird, daß die entstehenden weiteren Mischsignale tiefpaßgefiltert werden und daß die tiefpaßgefilterten weiteren Mischsignale (SPC1, SPC2) zur Bildung des ersten Korrektursignals (G38c) quadriert und voneinander subrahiert werden und zur Bildung des zweiten Korrektursignals (G38s) miteinander und mit zwei multipliziert werden.

3. Verfahren nach Anspruch 2, dadurch gekennzeichnet, daß die tiefpaßgefilterten weiteren Mischsignale (SPC1, SPC2) zur Bildung eines die Amplitude des Pilotsignals darstellenden Signals (A) quadriert und addiert werden.

4. Verfahren nach Anspruch 3, dadurch gekennzeichnet, daß die Korrektursignale (G38c, G38s) mit Hilfe des die Amplitude des Pilotsignals darstellenden Signals (A) im Sinne einer Normierung ihrer Amplitude gesteuert werden.

5. Verfahren nach Anspruch 4, dadurch gekennzeichnet, daß zur Bildung der Korrektursignale (G38c, G38s) ferner je ein Filter (34, 35) vorgesehen ist, dessen Bandbreite derart steuerbar ist, daß nach einem Wechsel des empfangenen Senders die Bandbreite zunächst groß ist und danach verringert wird, und daß die Filter (34, 35) ferner zur Normierung der Amplitude der Korrektursignale dienen.

6. Verfahren nach einem der Ansprüche 2 bis 5, dadurch gekennzeichnet, daß nach der Tiefpaßfilterung (17, 18) der weiteren Mischsignale eine Abtastratenreduzierung (19, 20) erfolgt.

7. Verfahren nach einem der Ansprüche 4 bis 6, dadurch gekennzeichnet, daß das die Amplitude des Pilotsignals darstellende Signal (A) zur Erkennung, ob Stereo-Empfang vorliegt, mit einem vorgegebenen Wert verglichen wird.

8. Verfahren nach einem der vorhergehenden Ansprüche, dadurch gekennzeichnet, daß die Multiplikation mit dem Referenzträger und/oder mit dem Referenz-Pilotsignal durch Multiplikation mit aus einer Tabelle ausgelesenen Werten erfolgt.

9. Verfahren nach einem der vorhergehenden Ansprüche, dadurch gekennzeichnet, daß die Summe der korrigierten Mischsignale über einen Multiplizierer (7) der Matrixschaltung zuführbar ist, wobei der Multiplilzierer (7) von einer die Qualität des Empfangssignals darstellenden Größe (D) steuerbar ist.

10. Verfahren nach Anspruch 3, dadurch gekennzeichnet, daß zur Bildung der Korrektursignale (G38c, G38s) ferner das Signal, das aus den tiefpaßgefilterten weiteren Mischsignalen (SPC1, SPC2) durch Quadrieren und voneinander Subtrahieren gewonnen ist, und das Signal, das aus den tiefpaßgefilterten weiteren Mischsignalen durch Multiplizieren miteinander und Multiplizieren mit zwei gewonnen ist, jeweils mit dem Kehrwert des die Amplitude des Pilotsignals darstellenden Signals (A) multipliziert wird und daß die Ergebnisse der Multiplikationen die Korrektursignale darstellen.

11. Verfahren nach Anspruch 3, dadurch gekennzeichnet, daß zur Bildung der Korrektursignale (G38c, G38s) ferner das Signal, das aus den tiefpaßgefilterten weiteren Mischsignalen (SPC1, SPC2) durch Quadrieren und voneinander Subtrahieren gewonnen ist, und das Signal, das aus den tiefpaßgefilterten weiteren Mischsignale durch Multiplizieren miteinander und Multiplizieren mit zwei gewonnen ist, die Korrektursignale darstellen und daß das die Amplitude des Pilotsignals darstellende Signal mit dem Summensignal vor dessen Zuführung zur Matrixschaltung multipliziert wird.

12. Verfahren nach Anspruch 11, dadurch gekennzeichnet, daß die Korrektursignale (G38c, G38s) und das die Amplitude des Pilotsignals darstellende Signal (A) über Tiefpaßfilter geleitet werden.

## Claims

1. Method for decoding a multiplex signal in a stereo broadcast receiver, the multiplex signal (MPX) containing a summation signal (L + R) in the baseband, a subcarrier modulated with a difference signal (L - R), and a pilot signal at half the frequency of the subcarrier, characterized

   in that the multiplex signal (MPX) in digital form is multiplied by a reference carrier in two phase angles which are shifted through 90° relative to one another, the said reference carrier being obtained from a sampling clock signal generated in the broadcast receiver,
   in that the mixed signals (Imr1, Imr2) resulting from the multiplication (2, 3) are multiplied by a respective correction signal (G38c, G38s), with the formation of corrected mixed signals (Ims1, Ims2),
   and in that the corrected mixed signals are added and fed, together with the summation signal contained in the multiplex signal, to a matrix circuit (8, 9) in order to form stereo audio signals (L, R).

2. Method according to Claim 1, characterized in that, in order to form the correction signals (G38c, G38s), the multiplex signal (MPX) is multiplied by a reference pilot signal in two phase angles which are shifted through 90° relative to one another, the said reference pilot signal being phase-coupled to the reference carrier, in that the resultant further mixed signals are subjected to low-pass filtering, and in that the low-pass-filtered further mixed signals (SPC1, SPC2) are squared and subtracted from one another in order to form the first correction signal (G38c) and are multiplied by one another and by two in order to form the second correction signal (G38s).

3. Method according to Claim 2, characterized in that the low-pass-filtered further mixed signals (SPC1, SPC2) are squared and added in order to form a signal (A) representing the amplitude of the pilot signal.

4. Method according to Claim 3, characterized in that the correction signals (G38c, G38s) are controlled in the sense of normalization of their amplitude with the aid of the signal (A) representing the amplitude of the pilot signal.

5. Method according to Claim 4, characterized in that, in order to form the correction signals (G38c, G38s), a respective filter (34, 35) is furthermore provided, the bandwidth of which filter can be controlled in such a way that the bandwidth is initially large after a change of the received transmitter and is subsequently reduced, and in that the filters (34, 35) furthermore serve for the normalization of the amplitude of the correction signals.

6. Method according to one of Claims 2 to 5, characterized in that the low-pass filtering (17, 18) of the further mixed signals is followed by sampling rate reduction (19, 20).

7. Method according to one of Claims 4 to 6, characterized in that the signal (A) representing the amplitude of the pilot signal is compared with a predetermined value for the purpose of identifying whether stereo reception is present.

8. Method according to one of the preceding claims, characterized in that the multiplication by the reference carrier and/or by the reference pilot signal is effected by multiplication by values read from a table.

9. Method according to one of the preceding claims, characterized in that the sum of the corrected mixed signals can be fed via a multiplier (7) to the matrix circuit, it being possible to control the multiplier (7) by a quantity (D) representing the quality of the reception signal.

10. Method according to Claim 3, characterized in that, in order to form the correction signals (G38c, G38s), furthermore the signal which is obtained from the low-pass-filtered further mixed signals (SPC1, SPC2) by means of squaring and subtraction from one another and the signal which is obtained from the low-pass-filtered further mixed signals by means of multiplication by one another and multiplication by two are in each case multiplied by the reciprocal of the signal (A) representing the amplitude of the pilot signal, and in that the results of the multiplications constitute the correction signals.

11. Method according to Claim 3, characterized in that, in order to form the correction signals (G38c, G38s), furthermore the signal which is obtained from the low-pass-filtered further mixed signals (SPC1, SPC2) by means of squaring and subtraction from one another and the signal which is obtained from the low-pass-filtered further mixed signals by means of multiplication by one another and multiplication by two constitute the correction signals, and in that the signal representing the amplitude of the pilot signal is multiplied by the summation signal before the latter is fed to the matrix circuit.

12. Method according to Claim 11, characterized in that the correction signals (G38c, G38s) and the signal (A) representing the amplitude of the pilot signal are conducted via low-pass filters.

**Revendications**

1. Procédé de décodage d'un signal multiplexé dans un récepteur de radiodiffusion stéréophonique, dans lequel le signal multiplexé (MPX) contient un signal de sommation (L + R) dans la bande de base, une sous-porteuse modulée par un signal différentiel (L - R) et un signal pilote ayant une fréquence égale à la moitié de la fréquence de la sous-porteuse,
caractérisé en ce que

- le signal multiplexé (MPX) est multiplié sous forme numérique par une porteuse de référence obtenue à partir d'un cycle de balayage produit dans le récepteur de radiodiffusion dans deux positions de phase décalées de 90° l'une par rapport à l'autre,
- les signaux mixtes (Imr1, Imr2) qui résultent de la multiplication (2, 3) sont multipliés chacun par un signal de correction (G38c et G38s) en formant des signaux mixtes corrigés (Ims1 et Ims2), et
- les signaux mixtes corrigés sont additionnés et, en même temps que le signal de sommation contenu dans le signal multiplexé, sont amenés à un circuit matriciel (8, 9) pour former des signaux stéréo - audio (L, R).

2. Procédé selon la revendication 1,
caractérisé en ce que

- pour former les signaux de correction (G38c, G38s) on multiplie le signal multiplexé (MPX) par un signal pilote de référence en phase avec la porteuse de référence dans deux positions de phases décalées de 90° l'une par rapport à l'autre,
- les autres signaux mixtes qui en résultent sont filtrés à travers des filtres passe-bas, et
- les autres signaux mixtes (SPC1 et SPC2), filtrés à travers des filtres passe-bas, sont élevés au carré et soustraits l'un de l'autre pour former le premier signal de correction (G38c), et sont multipliés l'un par l'autre et par deux pour former le second signal de correction (G38s).

**3.** Procédé selon la revendication 2,
caractérisé en ce que

les autres signaux mixtes (SPC1 et SPC2), filtrés à travers des filtres passe-bas, sont élevés au carré et additionnés pour former un signal (A) représentant l'amplitude du signal pilote.

**4.** Procédé selon la revendication 3,
caractérisé en ce que

les signaux de correction (G38c, G38s) sont commandés à l'aide du signal (A) qui représente l'amplitude du signal pilote, dans le sens d'une standardisation de leur amplitude.

**5.** Procédé selon la revendication 4,
caractérisé en ce que

- pour former les signaux de correction (G38c, G38s), on prévoit en outre respectivement un filtre (34, 35) dont la largeur de bande peut être commandée de telle façon qu'après un changement de l'émetteur reçu on ait une largeur de bande tout d'abord grande puis ensuite réduite, et
- les filtres (34, 35) servent à standardiser l'amplitude des signaux de correction.

**6.** Procédé selon l'une des revendications 2 à 5,
caractérisé en ce qu'

après le filtrage (17, 18) à travers des filtres passe-bas des autres signaux mixtes, on a une réduction du taux de balayage (19, 20).

**7.** Procédé selon l'une des revendications 4 à 6,
caractérisé en ce que

l'amplitude du signal (A) qui représente le signal pilote, est comparé à une valeur prédéfinie, pour savoir si l'on a une réception stéréophonique.

**8.** Procédé selon l'une des revendications précédentes,
caractérisé en ce que

la multiplication par la porteuse de référence et/ou par le signal pilote de référence a lieu par multiplication par des valeurs extraites d'une table.

**9.** Procédé selon l'une des revendications précédentes,
caractérisé en ce que

la somme des signaux mixtes corrigés est amenée, par l'intermédiaire d'un multiplicateur (7), au circuit matriciel, le multiplicateur (7) pouvant être commandé par une grandeur (D) qui représente la qualité du signal de réception.

**10.** Procédé selon la revendication 3,
caractérisé en ce que

- pour former les signaux de correction (G38c, G38s) on multiplie en outre le signal obtenu à partir des autres signaux mixtes (SPC1 et SPC2), filtrés à travers des filtres passe-bas, en les élevant au carré et en les soustrayant l'un de l'autre, et le signal obtenu à partir des autres signaux mixtes filtrés à travers des filtres passe-bas, en les multipliant l'un par l'autre et par deux, respectivement par la valeur inverse du signal (A) qui représente l'amplitude du signal pilote, et
- les résultats des multiplications représentent les signaux de correction.

**11.** Procédé selon la revendication 3,
caractérisé en ce que

- pour former les signaux de correction (G38c, G38s), en outre le signal obtenu à partir des autres signaux mixtes, (SPC1 et SPC2) filtrés à travers des filtres passe-bas, en les élevant au carré et en les soustrayant l'un de l'autre, et le signal obtenu à partir des autres signaux mixtes filtrés à travers des filtres passe-bas, en les multipliant l'un par l'autre et par deux, constituent les signaux de correction, et
- le signal qui représente l'amplitude du signal pilote est multiplié par le signal de sommation avant de l'amener au circuit matriciel.

12. Procédé selon la revendication 11,
    caractérisé en ce que

    l'on fait passer les signaux de correction (G38c et G38s) et le signal (A) qui représente l'amplitude du signal pilote, dans des filtres passe-bas.

Fig. 1

Fig. 2

Fig. 3